# EUROPEAN PATENT APPLICATION

(11) **EP 4 775 023 A1**
(43) Date of publication of application: **15.07.2026**
(21) Application number: 26150566.3
(22) Date of filing: 07.01.2026
(51) Int. Cl.: A01G 2/10, A01G 9/08, B07B 1/10

(54) **A SYSTEM ARRANGED FOR SINGULATION OF CUTTINGS AND A METHOD FOR SINGULATION OF CUTTINGS**

(30) Priority: 13.01.2025 NL 2039583
(71) Applicant: High Tech Alliance Projects B.V., 5554 GM Valkenswaard (NL)
(72) Inventor: STEYVERS, Guillaume Antonius Maria, VALKENSWAARD (NL); VAN MIERLO, Johannes Hermanus, VALKENSWAARD (NL); DRIESSEN, Jeroen Johannes, VALKENSWAARD (NL)
(74) Representative: Algemeen Octrooi- en Merkenbureau B.V.

(57) **Abstract**

A method for singulation of cuttings and a system arranged for singulation of cuttings, the system comprising:
- a first conveyor comprising a first conveyor surface arranged for forwarding the cuttings at a first forwarding speed in a first forwarding direction;
- a first singulation module arranged for the at least partly singulation of cuttings that, during use, are present on the first conveyor surface of the first conveyor;
- a second conveyor comprising a second conveyor surface arranged for receiving the at least partly singulated cuttings from the first conveyor and forwarding the at least partly singulated cuttings at a second forwarding speed in a second forwarding direction;
- a second singulation module arranged for singulation of the at least partly singulated cuttings that, during use, are present on the second conveyor surface of the second conveyor.

## Description

According to a first aspect, the present disclosure relates to a system arranged for singulation of cuttings.

According to a second aspect, the present disclosure relates to a method for singulation of cuttings.

Cuttings are portions of a plant, such as stem cuttings taken from the plant's stem with a few leaves attached, removed from the parent plant and used to grow a new plant. Using cuttings for creating offspring of a parent plant, is common in plants like chrysanthemums, roses, and geraniums.

Cuttings play a vital role in the propagation of plant species, serving as a cost-effective and reliable method for producing genetically identical plants. Among these, cuttings are widely utilized in the ornamental horticulture industry due to their high commercial value and popularity. However, the handling and processing of cuttings present significant challenges, particularly in achieving efficiency, consistency, and scalability.

The current reliance on manual labour for tasks such as sorting and singulating cuttings is not only labour-intensive but more importantly also subject to variability in quality. Additionally, the growing demand for cuttings has heightened the need for innovative approaches to improve productivity while maintaining high standards of quality and care for the delicate cuttings.

It is therefore an object of the present disclosure to provide a system and method for singulation of cuttings that at least partly overcome one or more of the above-mentioned drawbacks.

According to a first aspect of the present invention this is achieved by a system arranged for singulation of cuttings, the system comprising:
- a first conveyor comprising a first conveyor surface arranged for forwarding the cuttings at a first forwarding speed in a first forwarding direction;
- a first singulation module arranged for the at least partly singulation of cuttings that, during use, are present on the first conveyor surface of the first conveyor;
- a second conveyor comprising a second conveyor surface arranged for receiving the at least partly singulated cuttings from the first conveyor and forwarding the at least partly singulated cuttings at a second forwarding speed in a second forwarding direction;
- a second singulation module arranged for singulation of the at least partly singulated cuttings that, during use, are present on the second conveyor surface of the second conveyor.

The system enables a novel solution designed specifically for the handling and processing of cuttings, offering a highly automated, precise, and scalable approach to improve the productivity and reliability of plant cutting propagation and singulation. The invention aims to support the sustainable growth of the horticulture industry while reducing labour dependency and costs. It was the insight of the inventors, to provide a system that can easily be scaled and adapted to specific requirements, like throughput and dimensions, and to the type of cuttings that need to be singulated, while ensuring accuracy and minimum damage to the cuttings.

The present invention at least partly relies on the insight that cuttings may be singulated from each other during subsequent steps, wherein during each of the subsequent steps cuttings are singulated from each other to achieve a predetermined level of singulation. In other words, after passing the first singulation module a lower level of singulation is achieved than level of singulation of the cuttings after passing the second singulation module.

Within the context of the present disclosure, singulation is to be understood as separating objects, such a cuttings, from each other that may be provided relative large batches and/or entangled with each other.

It is noted that singulation may performed as a preparatory step for sorting of singulated cuttings in different groups. Within the context of the present disclosure sorting is to be understood as allocating an individual cutting of the cuttings to a predetermined group having predetermined characteristics. This is beneficial for realising the supply to a customer of relative high quality cuttings.

Preferably, the second forwarding speed is higher than the first forwarding speed. The system according to the invention enables easy and accurate scalability by adapting the first forwarding speed and second forwarding speed, based on the type of cuttings that need to be singulated. A higher second forwarding speed is in particular attractive for supporting the singulation of the cuttings. The reason for this is that after singulation a given number of cuttings is spread over a larger area of a conveyor. As a result of this a higher forwarding speed is beneficial for realizing a predetermined throughput of cuttings per time period.

Preferably, the first singulation module comprises:
- a first swiping unit comprising first swiping elements, wherein the first swiping elements are arranged for being provided at a first predetermined minimum distance above the first conveyor surface and wherein the first swiping unit is arranged for rotating the first swiping elements about a first rotation axis for moving the first swiping elements at the first predetermined minimum distance in a direction having a direction component in a direction opposite to the first forwarding direction, preferably, wherein, at the first predetermined minimum distance, the first swiping elements, during use, are moving in a direction opposite to the first forwarding direction.

The first swiping unit according to the invention ensures a highly automated, precise, and scalable approach for the at least partly singulation of the cuttings, while ensuring accuracy and minimum damage to the cuttings. The first swiping elements are preferably designed as resilient cylindrical and/or truncated conical protrusions, that are provided in parallel rows on the outer circumference of the first swiping unit, wherein preferably, each row of first swiping elements has an offset in the longitudinal direction with respect to an adjacent row.

The first swiping unit according to the invention enables easy and accurate scalability by adapting the mutual distance, dimensions and stiffness of the first swiping elements, dimensions and rotation speed of the first swiping unit, and the first predetermined minimum distance, based on the type of cuttings that need to be singulated.

In a preferred embodiment, the first singulation unit further comprises:
- a second swiping unit comprising second swiping elements, wherein the second swiping elements are arranged for being provided at a second predetermined minimum distance above the first conveyor surface and wherein the second swiping unit is arranged for rotating the second swiping elements about a second rotation axis for moving the second swiping elements at the second predetermined minimum distance in a direction having a direction component in a direction opposite to the first forwarding direction, preferably, wherein, at the second predetermined minimum distance, the second swiping elements, during use, are moving in a direction opposite to the first forwarding direction, wherein the second swiping unit is provided behind the first swiping unit in the first forwarding direction.

The second swiping unit according to the invention ensures a highly automated, precise, and scalable approach for the at least partly further singulation of the cuttings, while ensuring accuracy and minimum damage to the cuttings. The second swiping elements are preferably designed as resilient cylindrical and/or truncated conical protrusions, that are provided in parallel rows on the outer circumference of the second swiping unit, wherein preferably, each row of second swiping elements has an offset in the longitudinal direction with respect to an adjacent row.

The second swiping unit according to the invention enables easy and accurate scalability by adapting the mutual distance, dimensions and stiffness of the second swiping elements, dimensions and rotation speed of the second swiping unit, and the second predetermined minimum distance, based on the type of cuttings that need to be singulated.

Preferably, the rotation speed of the first swiping unit is equal to the rotation speed of the second swiping unit, the diameter of the first swiping unit is larger than the diameter of the second swiping unit, and/or the length of the first swiping elements is larger than the length of the second swiping elements, and/or the diameter of the first swiping elements is larger than the diameter of the second swiping elements. This ensures a highly automated, precise, and scalable approach for the at least partly further singulation of the cuttings, while ensuring accuracy and minimum damage to the cuttings.

Advantageously, the first predetermined minimum distance is larger than the second predetermined minimum distance and/or wherein a stiffness of the first swiping elements is larger than a stiffness of the second swiping elements.

This ensures a highly automated, precise, and scalable approach for the at least partly further singulation of the cuttings, while ensuring accuracy and minimum damage to the cuttings.

In an embodiment, the system further comprises:
- a supply unit arranged for supplying the cuttings to the first conveyor surface of the first conveyor;
- a detection unit positioned and arranged for detecting cuttings on the first conveyor surface at a first predetermined location along the first conveyor;
- a determining unit, communicatively coupled with the detection unit, arranged for determining that the amount of cuttings present on the first conveyor surface at the first predetermined location along the first conveyor exceeds a first predetermined threshold; and
- a control unit, communicatively coupled with the determining unit and the supply unit, arranged for controlling the supply unit for supplying the cuttings when the determining unit determines that the amount of cuttings present on the first conveyor surface at the first predetermined location along the first conveyor is below the first predetermined threshold and/or stopping the supply, by the supply unit, of the cuttings when the determining unit determines that the amount of cuttings present on the first conveyor surface at the first predetermined location along the first conveyor is exceeding the first predetermined threshold.

This ensures a highly automated, precise, and scalable approach for the singulation of the cuttings, while ensuring accuracy and minimum damage to the cuttings. By detecting cuttings on the first conveyor surface an optimal throughput is ensured, while furthermore preventing and detecting accumulation of cuttings on the first conveyor surface.

Preferably, the first predetermined location is located before the first swiping unit and/or before the second swiping unit, if any, in the first forwarding direction.

In a preferred embodiment, the second singulation module comprises:
- a third swiping unit comprising third swiping elements, wherein the third swiping element are arranged for being provided at a third predetermined minimum distance above the second conveyor surface and wherein the third swiping unit is arranged for rotating the third swiping elements about a third rotation axis for moving the third swiping elements at the third predetermined minimum distance in a direction having a direction component in the second forwarding direction, preferably, wherein, at the third predetermined minimum distance, the third swiping elements, during use, are moving in the second forwarding direction.

The third swiping unit according to the invention ensures a highly automated, precise, and scalable approach for the at least partly further singulation of the cuttings, while ensuring accuracy and minimum damage to the cuttings. The third swiping elements are preferably designed as bristles of a brush provided on the outer circumference of the third swiping unit for forming a round brush.

The third swiping unit according to the invention enables easy and accurate scalability by adapting the dimensions and stiffness of the third swiping elements, dimensions and rotation speed of the third swiping unit, and the third predetermined minimum distance, based on the type of cuttings that need to be singulated.

Preferably, the rotation speed of the third swiping unit is larger than the rotation speed of the first swiping unit and/or the second swiping unit.

Advantageously, the second predetermined minimum distance is larger than the third predetermined minimum distance.

This ensures a highly automated, precise, and scalable approach for the singulation of the cuttings, while ensuring accuracy and minimum damage to the cuttings.

In a preferred embodiment, the second singulation module comprises:
- a fourth swiping unit comprising fourth swiping elements, wherein the fourth swiping elements are arranged for being provided at a fourth predetermined minimum distance above the second conveyor surface and wherein the fourth swiping unit is arranged for rotating the fourth swiping elements about a fourth rotation axis for moving the fourth swiping elements at the fourth predetermined minimum distance in a direction having a direction component in a direction opposite to the second forwarding direction, preferably, wherein, at the fourth predetermined minimum distance, the fourth swiping elements, during use, are moving in a direction opposite to the second forwarding direction, wherein the third swiping unit is provided behind the fourth swiping unit in the second forwarding direction

The fourth swiping unit according to the invention ensures a highly automated, precise, and scalable approach for the at least partly further singulation of the cuttings, while ensuring accuracy and minimum damage to the cuttings. The fourth swiping elements are preferably designed as bristles of a brush provided on the outer circumference of the third swiping unit for forming a round brush.

The fourth swiping unit according to the invention enables easy and accurate scalability by adapting the dimensions and stiffness of the fourth swiping elements, dimensions and rotation speed of the fourth swiping unit, and the fourth predetermined minimum distance, based on the type of cuttings that need to be singulated.

Preferably, the rotation speed of the fourth swiping unit is equal to the rotation speed of the third swiping unit.

Preferably, the fourth predetermined minimum distance is larger than the third predetermined minimum distance.

This ensures a highly automated, precise, and scalable approach for the singulation of the cuttings, while ensuring accuracy and minimum damage to the cuttings.

In an embodiment, a stiffness of the second swiping elements is larger than a stiffness of the third swiping elements and/or fourth swiping elements, if any.

This ensures a highly automated, precise, and scalable approach for the singulation of the cuttings, while ensuring accuracy and minimum damage to the cuttings.

According to a second aspect of the present invention, there is provided a method for singulation of cuttings, the method comprising the steps of:
- forwarding cuttings by a first conveyor comprising a first conveyor surface moving at a first forwarding speed in a first forwarding direction;
- singulating, at least partly, cuttings, by a first singulation module, that are present on the first conveyor surface of the first conveyor;
- receiving, by a second conveyor, the at least partly singulated cuttings from the first conveyor;
- forwarding the at least partly singulated cuttings, by the second conveyor comprising a second conveyor surface moving at a second forwarding speed in a second forwarding direction;
- singulating, by a second singulation module, the at least partly singulated cuttings that are present on the second conveyor surface of the second conveyor.

In an embodiment, the step of singulating, by the first singulation module, comprises the following sub steps:
- providing a first swiping unit comprising first swiping elements, wherein the first swiping elements are at a first predetermined minimum distance above the first conveyor surface;
- rotating, by the first swiping unit, the first swiping elements about a first rotation axis for moving the first swiping elements at the first predetermined minimum distance in a direction having a direction component in a direction opposite to the first forwarding direction, preferably, wherein, at the first predetermined minimum distance, the first swiping elements are moving in a direction opposite to the first forwarding direction for the at least partly singulation of the cuttings.

In a further embodiment, the step of singulating, by the first singulation module, further comprises the following sub steps:
- providing a second swiping unit comprising second swiping elements, wherein the second swiping elements are at a second predetermined minimum distance above the first conveyor surface;
- rotating, by the second swiping unit, the second swiping elements about a second rotation axis for moving the second swiping elements at the second predetermined minimum distance in a direction having a direction component in a direction opposite to the first forwarding direction, preferably, wherein, at the second predetermined minimum distance, the second swiping elements are moving in a direction opposite to the first forwarding direction for the at least partly further singulation of the cuttings, wherein the second swiping unit is provided behind the first swiping unit in the first forwarding direction.

In a preferred embodiment, the first predetermined minimum distance is larger than the second predetermined minimum distance and/or wherein a stiffness of the first swiping elements is larger than a stiffness of the second swiping elements and/or wherein a rotation frequency of the first swiping unit and the second swiping unit is equal.

Preferably, the method further comprises the steps of:
- supplying, by a supply unit, the cuttings to the first conveyor surface of the first conveyor;
- detecting, by a detection unit, cuttings on the first conveyor surface at a first predetermined location along the first conveyor;
- determining, by a determining unit communicatively coupled with the detection unit, that the amount of cuttings present on the first conveyor surface at the first predetermined location along the first conveyor exceeds a first predetermined threshold; and
- controlling, by a control unit, communicatively coupled with the determining unit and the supply unit, the supply unit for supplying the cuttings when the determining unit determines that the amount of cuttings present on the first conveyor surface at the first predetermined location along the first conveyor is below the first predetermined threshold and/or stopping the supply, by the supply unit, of the cuttings when the determining unit determines that the amount of cuttings present on the first conveyor surface at the first predetermined location along the first conveyor is exceeding the first predetermined threshold

Advantageously, the first predetermined location is located before the first swiping unit and/or before the second swiping unit, if any, in the first forwarding direction.

In an embodiment, wherein the second forwarding speed is higher than the first forwarding speed.

In a further embodiment, the step of singulating, by the second singulation module, further comprises the following sub steps:
- providing a third swiping unit comprising third swiping elements, wherein the third swiping elements are at a third predetermined minimum distance above the second conveyor surface;
- rotating, by the third swiping unit, the third swiping elements about a third rotation axis for moving the third swiping elements at the third predetermined minimum distance in a direction having a direction component in the second forwarding direction, preferably, wherein, at the third predetermined minimum distance, the third swiping elements are moving in the second forwarding direction for the at least partly further singulation of the cuttings.

In a preferred embodiment, the second predetermined minimum distance is larger than the third predetermined minimum distance.

Preferably, the step of singulating, by the second singulation module, further comprises the following sub steps:
- providing a fourth swiping unit comprising fourth swiping elements, wherein the fourth swiping elements are at a fourth predetermined minimum distance above the second conveyor surface;
- rotating, by the fourth swiping unit, the fourth swiping elements about a fourth rotation axis for moving the fourth swiping elements at the fourth predetermined minimum distance in a direction having a direction component in a direction opposite to the second forwarding direction, preferably, wherein, at the fourth predetermined minimum distance, the fourth swiping elements are moving in a direction opposite to the second forwarding direction for the at least partly further singulation of the cuttings, wherein the third swiping unit is provided behind the fourth swiping unit in the second forwarding direction

Advantageously, the fourth predetermined minimum distance is larger than the third predetermined minimum distance.

In an embodiment, a stiffness of the second swiping elements is larger than a stiffness of the third swiping elements and fourth swiping elements, if any.

In a further embodiment, the cuttings are chrysanthemum cuttings, preferably chrysanthemum cuttings without roots.

Embodiment of the system according to the first aspect of the present disclosure as presented herein correspond to and/or are also applicable to the method according to the second aspect of the present disclosure, and vice versa.

Effects and advantages of the system according to the first aspect of the present disclosure as presented herein correspond to and/or are also applicable to effects of the method according to the second aspect of the present disclosure, and vice versa.

The present disclosure will be explained in more detail below by means of examples of a system according to a first aspect of the present disclosure and a method according to a second aspect of the present disclosure as shown in the drawings, in which:
Fig. 1 shows an isometric view of an embodiment of a system arranged for singulation of cuttings according to a first aspect the present invention;
Fig. 2 shows a top view of the system of Fig. 1;
Fig. 3 shows a side view of the system of Fig. 1;
Fig. 4 shows a schematic view of an embodiment of a first singulation module according to the present invention;
Fig. 5 shows a detailed view of an embodiment of a first swiping unit and/or a second swiping unit according to the present invention;
Fig. 6 shows a schematic view of an embodiment of a second singulation module according to the present invention;
Fig. 7 shows a schematic view of an embodiment of a method for singulation of cuttings according to a second aspect the present invention;
Fig. 8 and 9 show schematic views of sub steps of the method of Fig. 7.

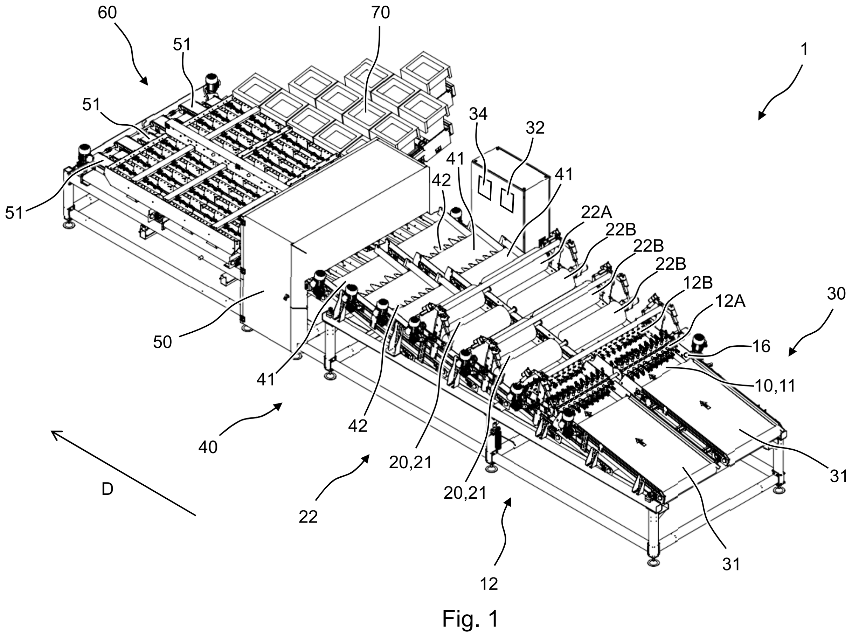

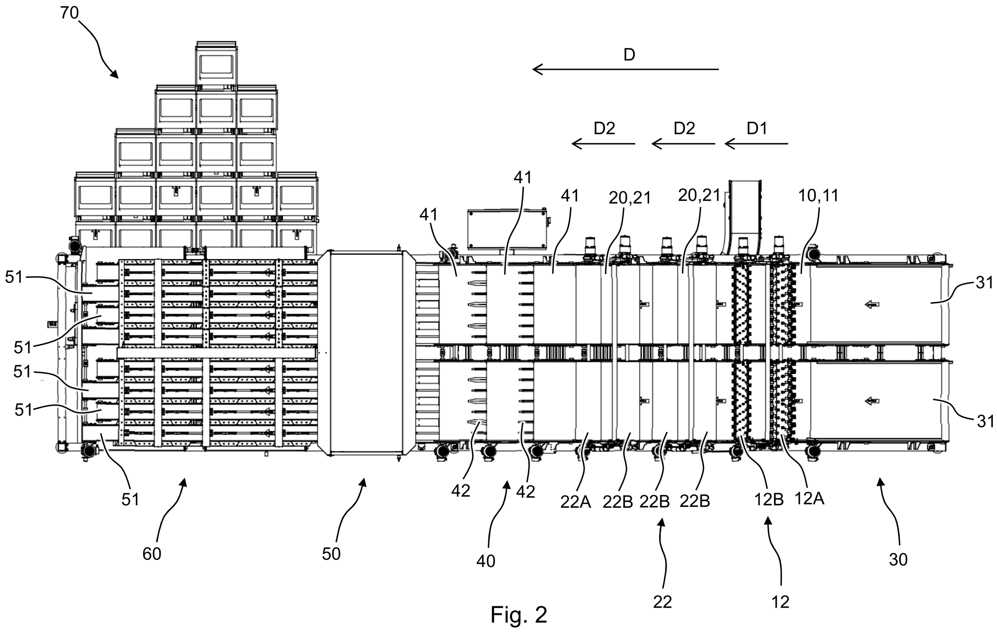

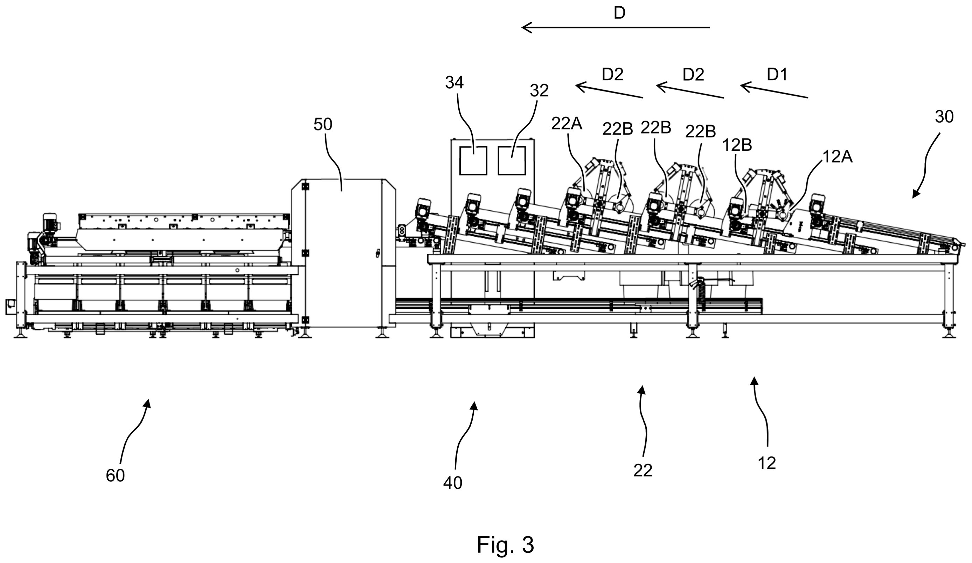

Figures 1 to 3 show in different views a system 1 arranged for singulation of cuttings according to a first aspect the present invention, the cuttings being in particular plant cuttings without roots, such as chrysanthemum cuttings.

The system 1 is provided with two processing lines, wherein each processing line comprises a supply unit 30, a first singulation module 12, a second singulation module 22, a distribution module 40, an imaging module 50, and a blasting module 60. Depending on the requirements, the system 1 can be provided with three or more processing lines.

The supply unit 30 is arranged for receiving a large batch of cuttings, stacked together in a heap. The supply unit 30 comprises a conveyor 31 that is inclined towards the transport direction D, for supplying the batch of cuttings at a predetermined speed to the first singulation module 12. The batch of cuttings is singulated by the first singulation module 12 and the second singulation module 22, and forwarded to the distribution module 40. The distribution module 40 comprises three conveyors 41 and division wall elements 42 for distributing and dividing the singulated cuttings over the respective conveyor surface. The conveyors 41 of the distribution module 40 are provided behind each other in the transport direction D and are inclined towards the transport direction D. The first conveyor 41 of the distribution module 40 is arranged for supplying the singulated cuttings at a first predetermined speed to the second conveyor 41 of the distribution module 40. The second conveyor 41 of the distribution module 40 is arranged for supplying the singulated cuttings at a second predetermined speed to the third conveyor 41 of the distribution module. The secondrd conveyor 41 of the distribution module 40 is arranged for supplying the singulated cuttings at a third predetermined speed to further conveyors 51.

While being transported on the further conveyors 51, wherein multiple further conveyors are provided next to each other, features of the individual singulated cuttings are identified by the imaging module 50, the features being for example size, length and/or state of the cuttings. Based on the identification, the singulated cuttings are selectively blasted from the further conveyors 51 by blasting units of the blasting module 60, and eventually collected selectively in containers 70. Cuttings that are not singulated are detected by the imaging module 50, and can be reintroduced to the supply unit 30.

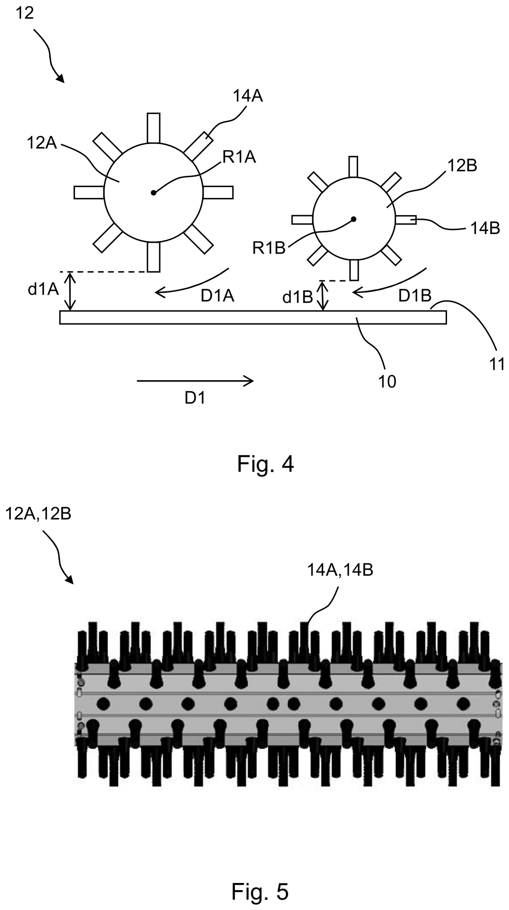

The first singulation module 12, as shown in more detail in figure 4, is arranged for the at least partly singulation of cuttings that are present on a first conveyor surface 11 of a first conveyor 10. The first conveyor 10 is inclined towards the transport direction D and is arranged for receiving the batch of cuttings from the conveyor 31 of the supply unit 30 and for forwarding the cuttings at a first forwarding speed in a first forwarding direction D1.

The first singulation module 12 comprises a first swiping unit 12A and a second swiping unit 12B, as shown in more detail in figure 5. The first swiping unit 12A comprises first swiping elements 14A in the form of resilient fingers, that are provided at a first predetermined minimum distance d1A above the first conveyor surface 11. The first swiping unit 12A is arranged for rotating the first swiping elements 14A about a first rotation axis R1A, such that the first swiping elements 14A move at the first predetermined minimum distance d1A in a direction D1A opposite to the first forwarding direction D1. The second swiping unit 12B is provided behind the first swiping unit 12A in the first forwarding direction D1 and comprises second swiping elements 14B in the form of resilient fingers, that are provided at a second predetermined minimum distance d1B above the first conveyor surface 11. The second swiping unit 12B is arranged for rotating the second swiping elements 14B about a second rotation axis R1B, such that the second swiping elements 14B move at the second predetermined minimum distance d1B in a direction D1B opposite to the first forwarding direction D1.

In the embodiment of figures 1 to 4, one singulation module 12 and two swiping units 12A, 12B are provided. However, depending on the requirements and/or type of cuttings, the system 1 can be provided with one or more singulation modules 12 and/or swiping units 12A, 12B accordingly.

Furthermore, the first predetermined minimum distance d1A is larger than the second predetermined minimum distance d1B, a stiffness of the first swiping elements 14A is larger than a stiffness of the second swiping elements 14B, a diameter of the first swiping unit 12A is larger than a diameter of the second swiping unit 12B, and a length and diameter of the first swiping elements 14A is larger than a length and diameter of the second swiping elements 14B, while a rotation frequency of the first swiping unit 12A and the second swiping 12B unit is equal.

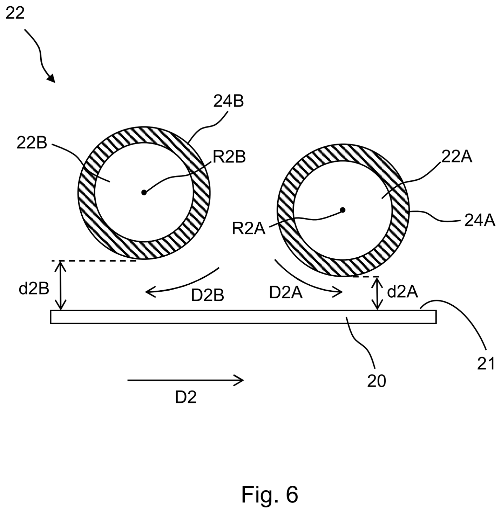

The second singulation module 22, as shown in more detail in figure 6, is arranged for singulation of the at least partly singulated cuttings that are present on a second conveyor surface 21 of a second conveyor 20. The second conveyor 20 is inclined towards the transport direction D and is arranged for receiving the cuttings from the first conveyor 10 and for forwarding the cuttings at a second forwarding speed in a second forwarding direction D2.

The second singulation module 22 comprises a third swiping unit 22A and a fourth swiping unit 22B. The third swiping unit 22A comprises third swiping elements 24A which form a round brush, that are provided at a third predetermined minimum distance d2A above the second conveyor surface 21. The third swiping unit 22A is arranged for rotating the third swiping elements 24A about a third rotation axis R2A, such that the third swiping elements 24A move at the third predetermined minimum distance d2A in a direction D2A corresponding to the second forwarding direction D2. The fourth swiping unit 22B is provided in front of the third swiping unit 22A in the second forwarding direction D2 and comprises fourth swiping elements 24B which form a round brush, that are provided at a fourth predetermined minimum distance d2B above the second conveyor surface 21. The fourth swiping unit 22B is arranged for rotating the fourth swiping elements 24B about a fourth rotation axis R2B, such that the fourth swiping elements 24B move at the fourth predetermined minimum distance d2B in a direction D2B opposite to the second forwarding direction D2.

Furthermore, the second predetermined minimum distance d1B is larger than the third predetermined minimum distance d2A, the fourth predetermined minimum distance d2B is larger than the third predetermined minimum distance d2A, and a stiffness of the second swiping elements 14B is larger than a stiffness of the third swiping elements 24A and/or fourth swiping elements 24B, while a rotation frequency of the third swiping unit 22A and the fourth swiping unit 22B is equal. The rotation frequency of the third swiping unit 22A and the fourth swiping unit 22B is higher than the rotation frequency of the first swiping unit 12A and the second swiping 12B.

In the embodiment of figures 1 to 3, two singulation modules 22 are provided, each having a conveyor 20 and two swiping units 22A, 22B. In this case, the four swiping units are identical shaped, wherein the predetermined minimum distance of a swiping unit is larger than the predetermined minimum distance of a subsequent swiping unit, as seen from the transport direction D. The first three swiping units rotate in a direction D2B, while the last swiping unit rotates in a counterclockwise direction D2A. Depending on the requirements and/or type of cuttings, the system 1 can be provided with one or more singulation modules 22 and/or swiping units 22A, 22B accordingly.

The speed of the respective conveyors 10, 20, 31, 41, 51 is controlled such, that the speed of each conveyor increases in the transport direction D.

The system 1 furthermore comprises a detection unit 16 positioned and arranged for detecting cuttings on the first conveyor surface 11 at a first predetermined location along the first conveyor 10, wherein the first predetermined location is located before the first swiping unit 12A in the first forwarding direction D1. The detection unit 16 is communicatively coupled with a determining unit 32. The detection unit 16, is arranged for determining that the amount of cuttings present on the first conveyor surface 11 at the first predetermined location along the first conveyor 10 exceeds a first predetermined threshold.

The system 1 furthermore comprises a control unit 34, communicatively coupled with the determining unit 32 and the supply unit 30. The control unit 34 is arranged for controlling the supply unit 30 for supplying the cuttings when the determining unit 32 determines that the amount of cuttings present on the first conveyor surface 11 at the first predetermined location along the first conveyor 10 is below the first predetermined threshold and for stopping the supply, by the supply unit 30, of the of the cuttings when the determining unit 32 determines that the amount of cuttings present on the first conveyor surface 11 at the first predetermined location along the first conveyor 10 is exceeding the first predetermined threshold.

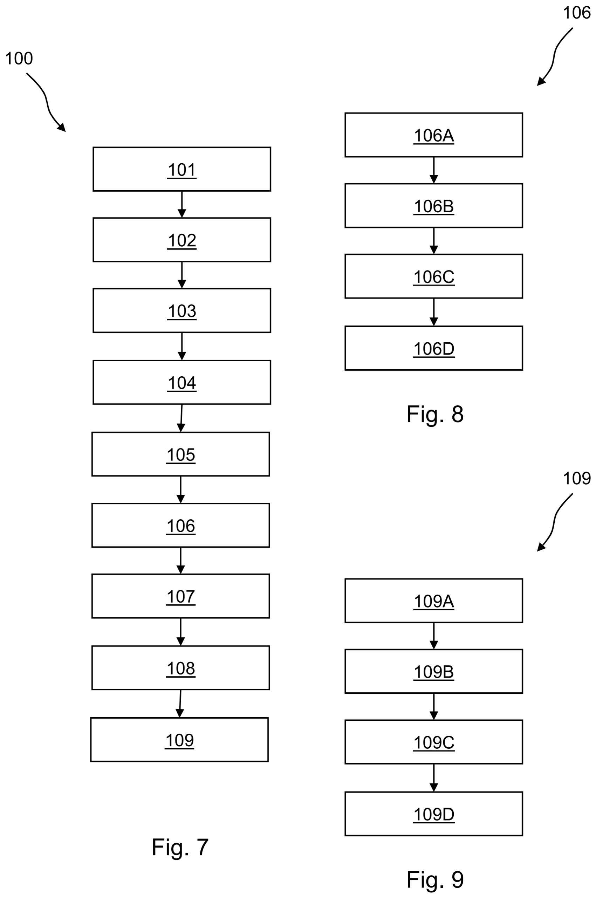

Figure 7 shows a schematic view of an embodiment of a method 100 for singulation of cuttings according to a second aspect the present invention, wherein figures 8 and 9 show schematic views of sub steps of the method 100.

The method 100 comprises the following steps, using the system 1 according to the first aspect of the present invention as described above:
- supplying 101, by the supply unit 30, the cuttings to the first conveyor surface 11 of the first conveyor 10;
- detecting 102, by the detection unit 16, cuttings on the first conveyor surface 11 at the first predetermined location along the first conveyor 10;
- determining 103, by the determining unit 32, that the amount of cuttings present on the first conveyor surface 11 at the first predetermined location along the first conveyor 10 exceeds a first predetermined threshold;
- controlling 104, by the control unit 34, the supply unit 30 for supplying the cuttings when the determining unit 32 determines that the amount of cuttings present on the first conveyor surface 11 at the first predetermined location along the first conveyor 10 is below the first predetermined threshold and for stopping the supply, by the supply unit 30, of the cuttings when the determining unit 32 determines that the amount of cuttings present on the first conveyor surface 11 at the first predetermined location along the first conveyor 10 is exceeding the first predetermined threshold.
- forwarding 105 the cuttings by the first conveyor 10 comprising the first conveyor surface 11 moving at the first forwarding speed in the first forwarding direction D1;
- singulating 106, at least partly, the cuttings, by the first singulation module 12, that are present on the first conveyor surface 11 of the first conveyor 10;
- receiving 107, by the second conveyor 20, the at least partly singulated cuttings from the first conveyor 10;
- forwarding 108 the at least partly singulated cuttings, by the second conveyor 20 comprising the second conveyor surface 21 moving at the second forwarding speed in the second forwarding direction D2;
- singulating 109, by the second singulation module 22, the at least partly singulated cuttings that are present on the second conveyor surface 21 of the second conveyor 20.

The step of singulating 106, by the first singulation module 12, comprises the following sub steps:
- providing 106A the first swiping unit 12A comprising first swiping elements 14A, wherein the first swiping elements 14A are at the first predetermined minimum distance d1A above the first conveyor surface 11;
- rotating 106B, by the first swiping unit 12A, the first swiping elements 14A about the first rotation axis R1A for moving the first swiping elements 14A at the first predetermined minimum distance d1A in the direction D1A for the at least partly singulation of the cuttings;
- providing 106C the second swiping unit 12B comprising second swiping elements 14B, wherein the second swiping elements 14B are at the second predetermined minimum distance d1B above the first conveyor surface 11;
- rotating 106C, by the second swiping unit 12B, the second swiping elements 14B about the second rotation axis R1B for moving the second swiping elements 14B at the second predetermined minimum distance d1B in the direction D1B for the at least partly further singulation of the cuttings.

The step of singulating 109, by the second singulation module 22, further comprises the following sub steps:
- providing 109A the third swiping unit 22A comprising third swiping elements 24A, wherein the third swiping elements 24A are at a third predetermined minimum d2A distance above the second conveyor surface 21;
- rotating 109B, by the third swiping unit 22A, the third swiping elements 24A about the third rotation axis R2A for moving the third swiping elements 24A at the third predetermined minimum distance d2A in the direction D2A for the at least partly further singulation of the cuttings;
- providing 109C the fourth swiping unit 22B comprising fourth swiping elements 24B, wherein the fourth swiping elements 24B are at the fourth predetermined minimum distance d2B above the second conveyor surface 21;
- rotating 109D, by the fourth swiping unit 22B, the fourth swiping elements 24B about the fourth rotation axis R2B for moving the fourth swiping elements 24B at the fourth predetermined minimum distance d2B in the direction D2B for the at least partly further singulation of the cuttings.

## Claims

1. A system (1) arranged for singulation of cuttings, the system (1) comprising:
- a first conveyor (10) comprising a first conveyor surface (11) arranged for forwarding the cuttings at a first forwarding speed in a first forwarding direction (D1);
- a first singulation module (12) arranged for the at least partly singulation of cuttings that, during use, are present on the first conveyor surface (11) of the first conveyor (10);
- a second conveyor (20) comprising a second conveyor surface (21) arranged for receiving the at least partly singulated cuttings from the first conveyor (10) and forwarding the at least partly singulated cuttings at a second forwarding speed in a second forwarding direction (D2);
- a second singulation module (22) arranged for singulation of the at least partly singulated cuttings that, during use, are present on the second conveyor surface (21) of the second conveyor (20).

2. The system (1) according to claim 1, wherein the first singulation module (12) comprises at least one of:
- a first swiping unit (12A) comprising first swiping elements (14A), wherein the first swiping elements (14A) are arranged for being provided at a first predetermined minimum distance (d1A) above the first conveyor surface (11) and wherein the first swiping unit (12A) is arranged for rotating the first swiping elements (14A) about a first rotation axis (R1A) for moving the first swiping elements (14A) at the first predetermined minimum distance (d1A) in a direction (D1A) having a direction component in a direction opposite to the first forwarding direction (D1), preferably, wherein, at the first predetermined minimum distance (d1A), the first swiping elements (14A), during use, are moving in a direction opposite to the first forwarding direction (D1); and
- a second swiping unit (12B) comprising second swiping elements (14B), wherein the second swiping elements (14B) are arranged for being provided at a second predetermined minimum distance (d1B) above the first conveyor surface (11) and wherein the second swiping unit (12B) is arranged for rotating the second swiping elements (14B) about a second rotation axis (R1B) for moving the second swiping elements (14B) at the second predetermined minimum distance (d1B) in a direction (D1B) having a direction component in a direction opposite to the first forwarding direction (D1);
preferably, wherein, at the second predetermined minimum distance (d1B), the second swiping elements (14B), during use, are moving in a direction opposite to the first forwarding direction (D1), wherein the second swiping unit (12B) is provided behind the first swiping unit (12A) in the first forwarding direction (D1).

3. The system (1) according to claim 2, wherein the first predetermined minimum distance (d1A) is larger than the second predetermined minimum distance (d1B) and/or wherein a stiffness of the first swiping elements (14A) is larger than a stiffness of the second swiping elements (14B).

4. The system (1) according to any one of the preceding claims, wherein the system (1) further comprises:
- a supply unit (30) arranged for supplying the cuttings to the first conveyor surface (11) of the first conveyor (10);
- a detection unit (16) positioned and arranged for detecting cuttings on the first conveyor surface (11) at a first predetermined location along the first conveyor (10);
- a determining unit (32), communicatively coupled with the detection unit (16), arranged for determining that the amount of cuttings present on the first conveyor surface (11) at the first predetermined location along the first conveyor (10) exceeds a first predetermined threshold; and
- a control unit (34), communicatively coupled with the determining unit (32) and the supply unit (30), arranged for controlling the supply unit (30) for supplying the cuttings when the determining unit (32) determines that the amount of cuttings present on the first conveyor surface (11) at the first predetermined location along the first conveyor (10) is below the first predetermined threshold and/or stopping the supply, by the supply unit (30), of the cuttings when the determining unit (32) determines that the amount of cuttings present on the first conveyor surface (11) at the first predetermined location along the first conveyor (10) is exceeding the first predetermined threshold;
preferably wherein the first predetermined location is located before the first swiping unit (12A) and/or before the second swiping unit (12B), if any, in the first forwarding direction (D1).

5. The system (1) according to any one of the preceding claims, wherein the second singulation module (22) comprises:
- a third swiping unit (22A) comprising third swiping elements (24A), wherein the third swiping elements (24A) are arranged for being provided at a third predetermined minimum distance (d2A) above the second conveyor surface (21) and wherein the third swiping unit (22A) is arranged for rotating the third swiping elements (24A) about a third rotation axis (R2A) for moving the third swiping elements (24A) at the third predetermined minimum distance (d2A) in a direction (D2A) having a direction component in the second forwarding direction (D2), preferably, wherein, at the third predetermined minimum distance (d2A), the third swiping elements (24A), during use, are moving in the second forwarding direction (D2), preferably wherein the second predetermined minimum distance (d1B) is larger than the third predetermined minimum distance (d2A).

6. The system (1) according to claim 5, wherein the second singulation module (22) comprises:
- a fourth swiping unit (22B) comprising fourth swiping elements (24B), wherein the fourth swiping elements (24B) are arranged for being provided at a fourth predetermined minimum distance (d2B) above the second conveyor surface (21) and wherein the fourth swiping unit (22B) is arranged for rotating the fourth swiping elements (24B) about a fourth rotation axis (R2B) for moving the fourth swiping elements (24B) at the fourth predetermined minimum distance (d2B) in a direction (D2B) having a direction component in a direction opposite to the second forwarding direction (D2), preferably, wherein, at the fourth predetermined minimum distance (d2B), the fourth swiping elements (24B), during use, are moving in a direction opposite to the second forwarding direction (D2), wherein the third swiping unit (22A) is provided behind the fourth swiping unit (22B) in the second forwarding direction (D2), preferably wherein the fourth predetermined minimum distance (d2B) is larger than the third predetermined minimum distance (d2A).

7. The system (1) according to claim 5 or 6, wherein a stiffness of the second swiping elements (14B) is larger than a stiffness of the third swiping elements (24A) and/or fourth swiping elements (24B), if any.

8. A method (100) for singulation of cuttings, the method (100) comprising the steps of:
- forwarding (105) cuttings by a first conveyor (10) comprising a first conveyor surface (11) moving at a first forwarding speed in a first forwarding direction (D1);
- singulating (106), at least partly, cuttings, by a first singulation module (12), that are present on the first conveyor surface (11) of the first conveyor (10);
- receiving (107), by a second conveyor (20), the at least partly singulated cuttings from the first conveyor (10);
- forwarding (108) the at least partly singulated cuttings, by the second conveyor (20) comprising a second conveyor surface (21) moving at a second forwarding speed in a second forwarding direction (D2);
- singulating (109), by a second singulation module (22), the at least partly singulated cuttings that are present on the second conveyor surface (21) of the second conveyor (20);
preferably wherein, the step of singulating (106), by the first singulation module (12), comprises the following sub steps:
- providing (106A) a first swiping unit (12A) comprising first swiping elements (14A), wherein the first swiping elements (14A) are at a first predetermined minimum distance (d1A) above the first conveyor surface (11);
- rotating (106B), by the first swiping unit (12A), the first swiping elements (14A) about a first rotation axis (R1A) for moving the first swiping elements (14A) at the first predetermined minimum distance (d1A) in a direction (D1A) having a direction component in a direction opposite to the first forwarding direction (D1), preferably, wherein, at the first predetermined minimum distance (d1A), the first swiping elements (14A) are moving in a direction opposite to the first forwarding direction (D1) for the at least partly singulation of the cuttings.

9. The method (100) according to claim 8, wherein the step of singulating (106), by the first singulation module (11), further comprises the following sub steps:
- providing (106C) a second swiping unit (12B) comprising second swiping elements (14B), wherein the second swiping elements (14B) are at a second predetermined minimum distance (d1B) above the first conveyor surface (11);
- rotating (106C), by the second swiping unit (12B), the second swiping elements (14B) about a second rotation axis (R1B) for moving the second swiping elements (14B) at the second predetermined minimum distance (d1B) in a direction (D1B) having a direction component in a direction opposite to the first forwarding direction (D1), preferably, wherein, at the second predetermined minimum distance (d1B), the second swiping elements (14B) are moving in a direction opposite to the first forwarding direction (D1) for the at least partly further singulation of the cuttings, wherein the second swiping unit (12B) is provided behind the first swiping unit (12A) in the first forwarding direction (D1);
preferably wherein the first predetermined minimum distance (d1A) is larger than the second predetermined minimum distance (d1B) and/or wherein a stiffness of the first swiping elements (14A) is larger than a stiffness of the second swiping elements (14B) and/or wherein a rotation frequency of the first swiping unit (12A) and the second swiping unit (12B) is equal.

10. The method (100) according to claim 8 or 9, wherein the method (100) further comprises the steps of:
- supplying (101), by a supply unit (30), the cuttings to the first conveyor surface (11) of the first conveyor (10);
- detecting (102), by a detection unit (16), cuttings on the first conveyor surface (11) at a first predetermined location along the first conveyor (10);
- determining (103), by a determining unit (32) communicatively coupled with the detection unit (16), that the amount of cuttings present on the first conveyor surface (11) at the first predetermined location along the first conveyor (10) exceeds a first predetermined threshold; and
- controlling (104), by a control unit (34), communicatively coupled with the determining unit (32) and the supply unit (30), the supply unit (30) for supplying the cuttings when the determining unit (32) determines that the amount of cuttings present on the first conveyor surface (11) at the first predetermined location along the first conveyor (10) is below the first predetermined threshold and/or stopping the supply, by the supply unit (30), of the cuttings when the determining unit (32) determines that the amount of cuttings present on the first conveyor surface (11) at the first predetermined location along the first conveyor (10) is exceeding the first predetermined threshold;
preferably wherein the first predetermined location is located before the first swiping unit (12A) and/or before the second swiping unit (12B), if any, in the first forwarding direction (D1).

11. The method (100) according to any one of the claims 8 to 10, wherein the second forwarding speed is higher than the first forwarding speed.

12. The method (100) according to any one of the claims 8 to 11, wherein the step of singulating (109), by the second singulation module (22), further comprises the following sub steps:
- providing (109A) a third swiping unit (22A) comprising third swiping elements (24A), wherein the third swiping elements (24A) are at a third predetermined minimum (d2A) distance above the second conveyor surface (21);
- rotating (109B), by the third swiping unit (22A), the third swiping elements (24A) about a third rotation axis (R2A) for moving the third swiping elements (24A) at the third predetermined minimum distance (d2A) in a direction (D2A) having a direction component in the second forwarding direction (D2), preferably, wherein, at the third predetermined minimum distance (d2A), the third swiping elements (24A) are moving in the second forwarding direction (D2) for the at least partly further singulation of the cuttings, preferably, wherein the second predetermined minimum distance (d1B) is larger than the third predetermined minimum distance (d2A).

13. The method (100) according to claim 12, wherein the step of singulating (109), by the second singulation module (22), further comprises the following sub steps:
- providing (109C) a fourth swiping unit (22B) comprising fourth swiping elements (24B), wherein the fourth swiping elements (24B) are at a fourth predetermined minimum distance (d2B) above the second conveyor surface (21);
- rotating (109D), by the fourth swiping unit (22B), the fourth swiping elements (24B) about a fourth rotation axis (R2B) for moving the fourth swiping elements (24B) at the fourth predetermined minimum distance (d2B) in a direction (D2B) having a direction component in a direction opposite to the second forwarding direction (D2), preferably, wherein, at the fourth predetermined minimum distance (d2B), the fourth swiping elements (24B) are moving in a direction opposite to the second forwarding direction (D2) for the at least partly further singulation of the cuttings, wherein the third swiping unit (22A) is provided behind the fourth swiping unit (22B) in the second forwarding direction (D2);
preferably wherein the fourth predetermined minimum distance (d2B) is larger than the third predetermined minimum distance (d2A).

14. The method (100) according to any one of the claims 8 to 13, wherein a stiffness of the second swiping elements (14B) is larger than a stiffness of the third swiping elements (24A) and fourth swiping elements (24B), if any.

15. The method (100) according to any one of the claims 8 to 14, wherein the cuttings are chrysanthemum cuttings, preferably chrysanthemum cuttings without roots.
